# EUROPÄISCHE PATENTSCHRIFT

(11) **EP 1 917 462 B1**
(45) Veröffentlichungstag und Bekanntmachung des Hinweises auf die Patenterteilung: **19.11.2008**
(21) Anmeldenummer: 06792587.5
(22) Anmeldetag: 27.07.2006
(51) Int. Cl.: F16H 63/38, F16H 63/30

(54) **SCHALTANORDNUNG ZUM VERSCHIEBEN EINER SCHALTGABEL**
SHIFTING ARRANGEMENT FOR DISPLACING A SELECTOR FORK
DISPOSITIF DE COMMUTATION POUR DEPLACER UNE FOURCHETTE D'EMBRAYAGE

(30) Priorität: 16.08.2005 DE 102005038681
(43) Veröffentlichungstag der Anmeldung: 07.05.2008
(73) Patentinhaber: Deere & Company, Moline, IL 61265-8098 (US)
(72) Erfinder: BUHRKE, Frank, 69488 Birkenau (DE)
(74) Vertreter: Holst, Sönke
(86) Internationale Anmeldenummer: PCT/EP2006/064743
(87) Internationale Veröffentlichungsnummer: WO 2007/020171

(56) Entgegenhaltungen:
- US-A- 5 720 688
- US-A1- 2004 154 425

## Beschreibung

### Stand der Technik

Die Erfindung betrifft eine Schaltanordnung zum Verschieben einer Schaltgabel eines Schaltgetriebezusammenbaus entlang einer Schaltstange, mit einem um eine Achse drehbar gelagerten Stellelement, das über einen Antriebsmechanismus mit der auf der Schaltstange verschiebbar gelagerten Schaltgabel verbunden ist, welcher zur Umsetzung der Drehbewegung des Stellelements in eine Verschiebebewegung der Schaltgabel entlang der Schaltstange eingerichtet ist, und mit einer Arretierungseinrichtung zur Arretierung der Schaltgabel in ausgewählten Stellpositionen.

Einsatzgebiet derartiger Schaltanordnungen sind mehrstufige Schaltgetriebe, in denen der Kraftfluss über Klauenkupplungen, insbesondere Synchronkupplungen hergestellt wird. In derartigen Getrieben ist ein Synchronkörper drehfest mit einer Getriebewelle verbunden. In axialer Richtung neben dem Synchronkörper befindet sich jeweils ein Gangrad, welches drehbar auf der Getriebewelle gelagert ist. Jedes Gangrad steht auf der dem Synchronkörper zugewandten Seite mit einem Kupplungskörper in Verbindung. Sowohl Kupplungskörper als auch Synchronkörper sind mit einer Außenverzahnung versehen. In die Außenverzahnung des Synchronkörpers greift die Innenverzahnung einer Schaltmuffe ein, die den Synchronkörper in Umfangsrichtung umschließt, mit diesem drehfest verbunden und in axialer Richtung verschiebbar ist. Zum Schalten eines Ganges wird nun die Schaltmuffe in axialer Richtung verschoben, bis die Innenverzahnung der Schiebemuffe sowohl mit der Außenverzahnung des Kupplungskörpers als auch mit der Außenverzahnung des Synchronkörpers im Eingriff steht.

Der Außenumfang der Schaltmuffe ist mit einer umlaufenden Nut versehen, in die eine Schaltgabel formschlüssig eingreift. Die Schaltgabel ist axial verschiebbar auf einer oder mehreren Schaltstange(n) gelagert. Ein axiales Verschieben der Schaltgabel auf der Schaltstange mittels eines ebenfalls verschiebbaren Stellelements führt zu einer Verschiebung der Schaltmuffe in Richtung eines Gangrades und damit zum Einlegen des Ganges. Es gibt auch Ausführungsformen, bei denen das Stellelement und mit ihm die Schaltgabel um die Achse des Stellelements gedreht wird, was ebenfalls zu einer Verschiebung der Schaltmuffe entlang der Getriebewelle führt. Bei einer anderen bekannten Ausführungsform wird die Schaltgabel im Abstand vom Stellelement und der Schaltmuffe durch Passstifte am Getriebegehäuse schwenkbar gelagert und zum Schalten durch das Stellelement um die Passstifte verschwenkt.

Um mehr als zwei Gänge sequentiell mit einem einzigen Stellelement schalten zu können, sind weiterhin Kurvenscheiben bekannt. Die mittels des Stellelements drehbare Kurvenscheibe weist eine oder mehrere vertiefte Steuerkurven auf, in die mit jeweils einer Schaltgabel zusammenwirkende Kurvenfolger eingreifen. Durch geeignete Anzahlen und Formen der Steuerkurven können zwei Steuermuffen bewegt werden. Jede der Steuermuffen kann den ihr zugeordneten Synchronkörper wahlweise mit einem bzw. zwei Gangrädern verbinden.

Die Bewegung der Schaltgabel gegenüber der Schaltstange erfolgt durch ein Stellelement, das mechanisch, d.h. durch Seilzüge, Gestänge, Hebelmechanismen oder dergleichen mit einem Schalthebel verbunden ist, welcher durch den Fahrer manuell betätigt wird. Bei anderen Ausführungsformen werden zur Bewegung des Stellelements fremdkraftbetätigte Motore verwendet, die eine Automatisierung der Schaltung ermöglichen.

Ein unbeabsichtigtes Verschieben der Schaltgabel, beispielsweise in Folge von Erschütterungen während des Fahrantriebs, führt zu einem unbeabsichtigten Kraftschluss bzw. zum unbeabsichtigten Lösen des Kraftschlusses zwischen dem Gangrad und der Getriebewelle. Um dieses zu vermeiden, ist es allgemein bekannt, das Stellelement oder die Schaltgabel mit einer Rastvorrichtung zu versehen, die sie in den gewünschten Stellpositionen arretiert.

In der US 2004/0154425 A, die als nächstliegender Stand der Technik angesehen wird, wird ein Schaltzusammenbau für eine Schaltgabel beschrieben, der ein drehbar gelagertes Zahnrad umfasst, das durch einen Motor über ein Schneckenrad in Drehung versetzt werden kann. Das Zahnrad trägt einen sich parallel zu Drehachse des Zahnrads erstreckenden, jedoch gegenüber der Achse exzentrisch nach außen versetzten Stift, welcher sich in eine Nut eines Schaltgabelzusammenbaus erstreckt. Der Schaltgabelzusammenbau ist auf einer Schaltstange verschiebbar gelagert und wirkt mit der umlaufenden Nut der Schaltmuffe zusammen. Die Drehbewegung des Zahnrads wird demnach durch den Stift und die Nut im Schaltgabelzusammenbau in eine Verschiebebewegung der Schaltgabel umgewandelt. Eine Arretierung der Schaltgabel in ihren Stellpositionen erfolgt lediglich durch den Motor, der im ausgeschalteten Zustand das Schneckenrad und das damit kämmende Zahnrad festsetzt. Das hat den Nachteil, dass die Antriebsverbindung zwischen dem Schaltgabelzusammenbau und dem Zahnrad (d. h. die Nut im Schaltgabelzusammenbau und der Stift) permanent die Haltekräfte übertragen muss, so dass sie hinreichend haltbar auszuführen ist und dennoch einem permanenten Verschleiß unterliegt.

In der DE 198 33 101 A wird vorgeschlagen, ein verschiebbares und/oder schwenkbares Stellelement eines Fahrzeuggetriebes mittels eines Arretierelements zu verrasten. Das Stellelement umfasst ein Rampenprofil, in das eine federnd gegen das Rampenprofil vorgespannte Kugel des Arretierelements eingreift. Das Arretierelement erstreckt sich durch eine Öffnung im Getriebegehäuse bis zum darin angeordneten Stellelement. Es sind demnach zur Anbringung des Arretierelements im Getriebegehäuse zusätzliche Maßnahmen zu treffen, insbesondere die Bereitstellung der Öffnung im Getriebegehäuse. Bei kompakten Getriebegehäusen reicht der Platz nicht unbedingt aus, das Arretierelement anzubringen.

Die DE 103 42 133 A beschreibt eine Rastvorrichtung zur Lagefixierung einer axial auf einer Schaltstange verschiebbaren Schaltgabel eines mehrstufigen Schaltgetriebes. Die Rastvorrichtung verrastet die Schaltgabel bzw. eine sie auf der Schaltstange abstützende Nabe mit der Schaltstange. Als nachteilig ist anzusehen, dass die Schaltstange mit Merkmalen (Bohrungen oder Ausnehmungen) zu versehen ist, mit denen die Rastvorrichtung zusammenwirkt. Wegen der erforderlichen Genauigkeit erweist sich die Herstellung der Schaltstange demnach als aufwändig und kostspielig.

### Aufgabe der Erfindung

Die der Erfindung zu Grunde liegende Aufgabe wird darin gesehen, eine Schaltanordnung für eine Schaltgabel mit einer einfach und preiswert herstellbaren Rastvorrichtung bereitzustellen.

Diese Aufgabe wird erfindurigsgemäß durch die Lehre des Patentanspruchs 1 gelöst, wobei in den weiteren Patentansprüchen Merkmale aufgeführt sind, die die Lösung in vorteilhafter Weise weiterentwickeln.

Die Schaltanordnung umfasst ein Stellelement, das im Getriebegehäuse um seine Achse drehbar gelagert ist. Ein geeigneter Antriebsmechanismus setzt die Drehbewegung des Stellelements in eine Verschiebebewegung der Schaltgabel entlang der Schaltstange um. Wird das Stellelement gedreht, bewegt sich ihm gegenüber die Schaltgabel. Es wird vorgeschlagen, dass eine Arretierungseinrichtung zur Arretierung der Schaltgabel in ihren Stellpositionen diese Relativbewegung nutzt. Die Arretierungseinrichtung ist daher eingerichtet, in den ausgewählten Stellpositionen der Schaltgabel selektiv eine Rastverbindung zwischen dem fest am Getriebegehäuse abgestützten Stellelement bzw. einem sich mit dem Stellelement bewegenden Element und der sich gegenüber dem Getriebegehäuse in ihre ausgewählten Stellpositionen linear bewegenden Schaltgabel bzw. einem sich mit ihr bewegenden Element bereitzustellen.

Auf diese Weise erübrigen sich Mittel zur Anbringung der Arretierungseinrichtung am Getriebegehäuse oder an der Schaltstange. Die erfindungsgemäße Schaltanordnung erfordert nur wenige zusätzliche Elemente für die Arretierungseinrichtung.

Der Antriebsmechanismus zur Umsetzung der Drehbewegung des Stellelements in eine Verschiebebewegung der Schaltgabel kann einen Träger mit einem gegenüber der Drehachse des Stellelements versetzten Stift und ein Nutelement umfassen, in dessen Nut der Stift eingreift. Beim Drehen des Stellelements bewegt sich der Stift in der Nut, so dass die gewünschte Umsetzung der Rotationsbewegung in eine Linearbewegung realisiert wird. Bei einer bevorzugten Ausführungsform ist der Träger mit dem Stellelement verbunden, während das Nutelement mit der Schaltgabel gekoppelt ist. Es ist aber auch eine umgekehrte Anordnung denkbar, bei der der Träger mit der Schaltgabel verbunden ist, während das Nutelement mit dem Stellelement gekoppelt ist. Die Nut kann bei beiden Ausführungsformen gerade oder in an sich bekannter Weise auch kurvenförmig ausgeführt sein. In diesem Fall kann das Nutelement eine oder zwei kurvenförmige Nuten umfassen, die mit jeweils einem von zwei Stiften zusammenwirken, die je mit einer Schaltgabel verbunden sind. Man könnte anstelle des Nutelements auch ein Element mit nur einer am Stift anliegenden Fläche verwenden, bräuchte dann aber eine Feder, um das Element gegen den Stift vorzuspannen und auf diese Weise eine Rückbewegung des Elements zu ermöglichen.

Die Arretierungseinrichtung umfasst vorzugsweise eine Feder und ein Rastelement, das durch die Feder in eine Rastausnehmung vorgespannt wird. Im Rahmen des erfindungsgemäßen Gedankens ist es beliebig, ob die Rastausnehmung mit der Schaltgabel oder mit dem Stellelement verbunden bzw. darin vorgesehen ist, während die Feder und das Rastelement dann mit dem Stellelement oder der Schaltgabel verbunden sind. Die erstgenannte Ausführungsform hat den Vorteil, dass die Feder innerhalb des Stellelements Aufnahme finden kann und auch das Rastelement in einer geeigneten stirnseitigen Öffnung oder Bohrung im Stellelement geführt gelagert sein kann, so dass sich ein kompakter Aufbau der Arretierungseinrichtung ergibt. Diese Öffnung ist vorzugsweise auf der Drehachse des Stellelements angeordnet, was wegen der Symmetrie fertigungstechnische Vorteile hat. Man könnte die Öffnung aber auch im Abstand von der Drehachse des Stellelements anordnen. Die Rastausnehmung ist bei dieser Ausführungsform beispielsweise direkt in der Schaltgabel oder einem mit ihr verbundenen Element angeordnet.

Konstruktiv besteht die Möglichkeit, den Antriebsmechanismus gegenüber dem Stellelement in unterschiedlichen, insbesondere um 180° gegeneinander versetzten Winkelpositionen festsetzen zu können. Dadurch wird die Zuordnung zwischen der Winkelstellung des Stellelements und der Position der Schaltgabel geändert, was eine Flexilibität hinsichtlich der Positionierung zweier Zahnradpaare ermöglicht, die mittels einer von der Schaltgabel betätigten Schaltmuffe wahlweise mit der Welle in Antriebsverbindung gebracht werden können. Insbesondere bei stark unterschiedlichen Übersetzungsverhältnissen zweier mit der Schaltgabel ansteuerbarer Zahnradpaare können durch die erzielte Wahlmöglichkeit bei einer geeigneten Wahl der Position der Zahnräder Vorteile bei der Fertigung der Welle des Getriebes erreicht werden. Darüber hinaus können Durchbiegungen der An- und Abtriebswelle erreicht sowie die spezifischen Lagerlebensdauern an den Lagern der Wellen verbessert werden.

Ein weiterer Vorteil der Erfindung besteht darin, dass keine Änderungen oder Anpassungen am Getriebegehäuse zur Aufnahme der Arretierungseinrichtung erforderlich sind. In das Gehäuse kann anstelle der erfindungsgemäßen Schaltanordnung auch eine an sich bekannte Schaltanordnung eingebaut werden, die eine mit dem Stellelement verbindbare Kurvenscheibe mit Steuerkurven umfasst, in die mit der Schaltgabel zusammenwirkende Kurvenfolger eingreifen. Die Kurvenscheibe kann durch Rastelemente mit dem Gehäuse in den Stellpositionen der Schaltgabel verrastet werden.

Der Getriebezusammenbau mit der erfindungsgemäßen Schaltanordnung findet insbesondere in Antriebssträngen von Fahrzeugen, insbesondere Arbeitsfahrzeugen wie selbstfahrenden Erntemaschinen oder Traktoren Verwendung. Er kann im zum Vortrieb des Fahrzeugs dienenden Antriebsstrang verwendet werden, oder zum Antrieb einer Zapfwelle.

### Ausführungsbeispiel

In den Zeichnungen ist ein nachfolgend näher beschriebenes Ausführungsbeispiel der Erfindung dargestellt. Es zeigt:
- Fig. 1: eine Explosionsansicht einer erfindungsgemäßen Schaltanordnung,
- Fig. 2: eine Explosionsansicht der Schaltanordnung aus der Figur 1 von der gegenüber liegenden Seite her betrachtet,
- Fig. 3: eine perspektivische Ansicht einer zusammengesetzten Schaltanordnung in einer ersten Stellposition,
- Fig. 4: die zusammengesetzte Schaltanordnung aus der Figur 3 in einer zweiten Stellposition,
- Fig. 5: einen seitlichen Querschnitt durch ein zweistufiges Getriebe mit der Schaltanordnung aus den Figuren 1 bis 4 in der Neutralstellung,
- Fig. 6: einen Querschnitt des Getriebes aus Figur 5 entlang der Linie 6-6,
- Fig. 7: einen seitlichen Querschnitt durch das Getriebe aus der Figur 5 mit einem geschalteten ersten Schaltrad,
- Fig. 8: einen Querschnitt des Getriebes aus Figur 7 entlang der Linie 8-8,
- Fig. 9: einen seitlichen Querschnitt durch das Getriebe aus der Figur 5 mit einem geschalteten zweiten Schaltrad,
- Fig. 10: einen Querschnitt des Getriebes aus Figur 9 entlang der Linie 9-9,
- Fig. 11: einen seitlichen Querschnitt des in den Figuren 5 bis 10 gezeigten Getriebegehäuses mit einem darin angeordneten Getriebe mit einer anderen Schaltanordnung und drei Übersetzungsstufen, und
- Fig. 12: einen Querschnitt durch die Schaltanordnung des Getriebes aus der Figur 11 entlang der Linie 11-11.

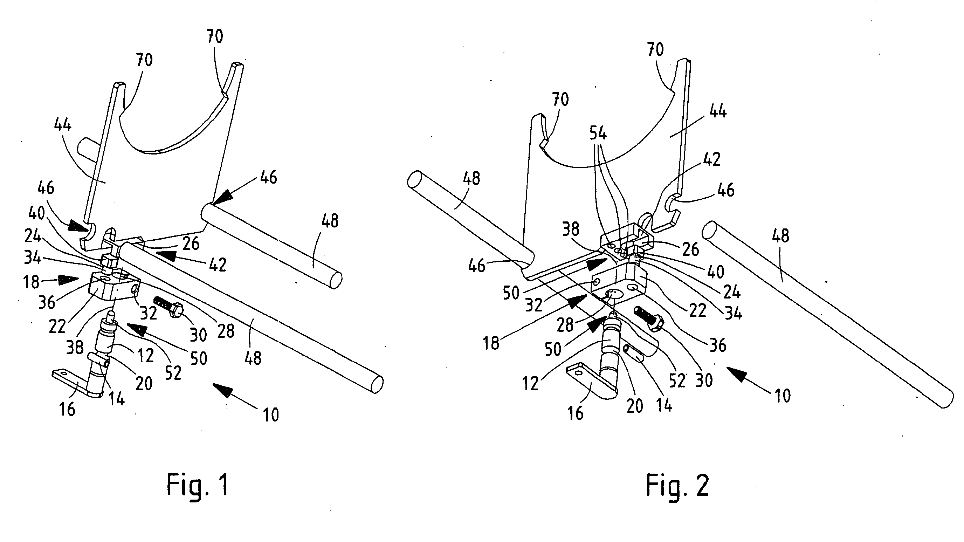

Die Figuren 1 und 2 zeigen perspektivische Explosionsansichten einer erfindungsgemäßen Schaltanordnung 10. Sie umfasst ein zylindrisches Stellelement 12, das um seine Längsachse drehbar gelagert und durch einen Pass- oder Hohlstift 14, der mit einer Nut 20 im Stellelement 12 zusammenwirkt, gegen axiales Verschieben gesichert wird. Ein unterer Hebel 16 ist mit dem Stellelement 12 verbunden und über eine nicht dargestellte Seil- und/oder Hebelmechanik mechanisch mit einem Schalthebel (nicht gezeigt) verbunden, mit dem ein Bediener von Hand die gewünschte Übersetzungsstufe des Getriebes auswählen kann. Alternativ ist der Hebel 16 oder das Stellelement 12 mit einem fremdkraftbetätigten Motor verbunden, der selbsttätig durch eine Steuerung angesteuert werden kann.

Die Schaltanordnung 10 umfasst weiterhin einen Antriebsmechanismus 18 zur Umwandlung der Drehbewegung des Stellelements 12 in eine Verschiebebewegung. Der Antriebsmechanismus 18 setzt sich aus einem Träger 22, einem Stift 24 und einem Nutelement 26 zusammen. Der Träger 22 weist eine erste Öffnung 28 auf, die auf das Stellelement 12 aufschiebbar ist. Eine Schraube 30 wird in eine Bohrung 32 des in der Nachbarschaft der Bohrung 32 geschlitzten Trägers 22 eingedreht. Die Bohrung 32 erstreckt sich quer zur Bohrung 28 und ist teilweise mit einem Gewinde versehen. Alternativ oder zusätzlich wird die Schraube 30 an ihrem vom Kopf beabstandeten Ende durch eine Mutter gesichert. Die Schraube 30 klemmt im montierten Zustand den Träger 22 am Stellelement 12 fest, indem der Schlitz des Trägers 22 zusammengedrückt wird.

Der Stift 24 hat einen zylindrischen, unteren Abschnitt 34, der in einer Bohrung 36 im Träger 22 Aufnahme findet. Die Bohrung 36 erstreckt sich parallel zur Achse 38 des Stellelements 12, ist ihr gegenüber jedoch radial versetzt, d. h. exzentrisch angeordnet. Der Stift 24 umfasst weiterhin einen Kopf 40 mit einem rechteckigen Querschnitt, welcher im zusammengebauten Zustand innerhalb einer Nut 42 des Nutelements 26 angeordnet ist, die sich quer zur Längsrichtung der Schaltstangen 48 erstreckt. Der Stift 24 ist demnach drehfest mit dem Nutelement 26 verbunden, aber entlang der Nut 42 verschiebbar. Bei einer anderen Ausführungsform ist er drehfest mit dem Träger 22 verbunden und gegenüber dem Nutelement 26 drehbar.

Das Nutelement 26 ist einteilig mit einer Schaltgabel 44 ausgeführt, die durch zwei Öffnungen 46 auf zwei Schaltstangen 48 verschiebbar gelagert ist. Die einteilige Ausführung des Nutelements 26 und der Schaltgabel 44 kann durch ein Gießverfahren erzielt werden. Das Nutelement 26 und die Schaltgabel 44 können auch zweiteilig ausgeführt und durch beliebige Verfahren, insbesondere Schmiede- oder Schweißverfahren, aneinander befestigt sein. Auch eine Klebe-, Niet-, Löt- oder Schraubverbindung wäre denkbar.

Wird das Stellelement 12 durch den Hebel 16 um seine Achse 38 gedreht, bewirkt der aufgrund der Bewegung des Trägers 22 sich auf einer zur Achse 38 exzentrischen Kurvenbahn mitbewegende Stift 24, dass sein Kopf 40 das Nutelement 26 mitführt, so dass die Schaltgabel entlang der Schaltstange 48 verschoben wird.

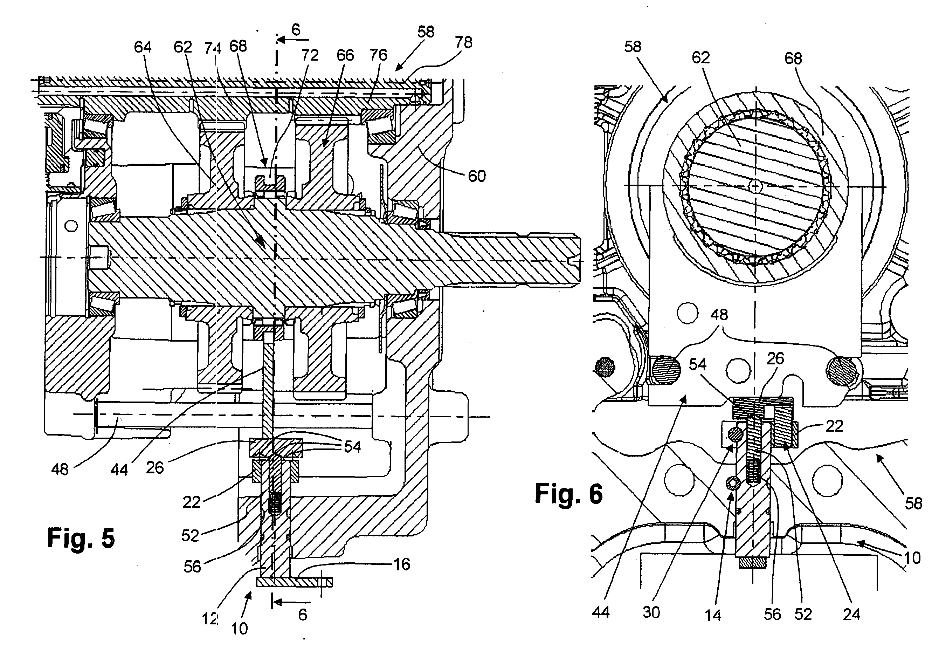

Zur Arretierung der Schaltgabel 44 in ihren Stellpositionen, die ausgewählten Übersetzungsstufen eines Getriebes oder einer Leerlaufstellung entsprechen, dient eine Arretierungseinrichtung 50, die sich aus einem Rastelement 52 und Rastausnehmungen 54 zusammensetzt. Das Rastelement 52 ist an der Stirnseite des Stellelements 12 in einer auf der Achse 38 angeordneten Bohrung angeordnet und durch eine Feder 56 (s. Figur 5) nach oben, in Richtung auf die Rastausnehmungen 54 vorgespannt. Die Rastausnehmungen 54 sind an der Unterseite der Schaltgabel 44 mittig, d. h. neben der Nut 42 im Nutelement 26 angeordnet. Es sind drei Rastausnehmungen in der Längsrichtung der Schaltstangen 48 hintereinander angeordnet. Das Rastelement 50 könnte auch im Träger 22 angeordnet sein, wobei dann die Position der Rastausnehmungen 54 anzupassen wäre.

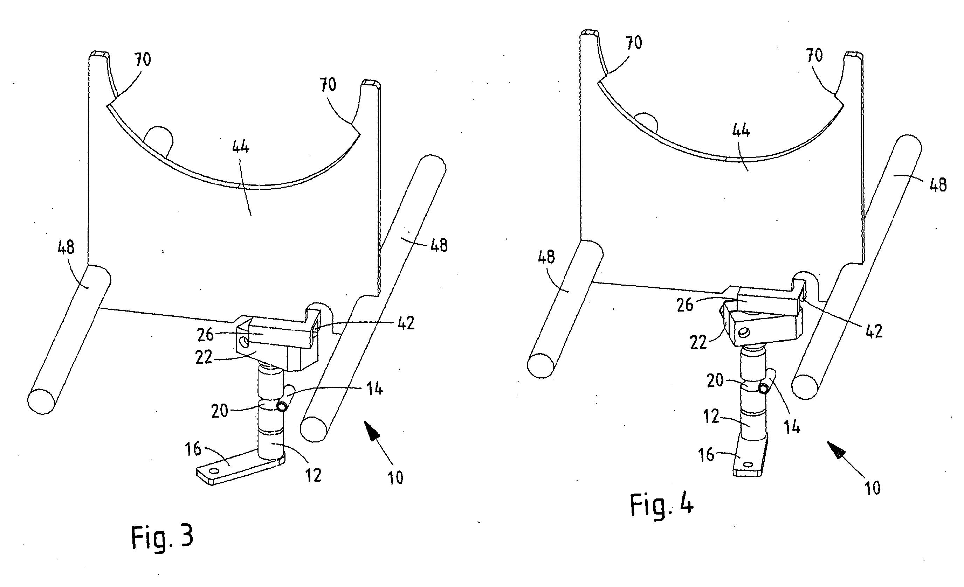

Die Figuren 3 und 4 verdeutlichen die Wirkungsweise des Antriebsmechanismus 18. Die Drehung des Hebels 16, des Stellelements 12 und des Trägers 22 wird durch den in der Nut 42 sich quer zur Längsrichtung der Schaltstangen 48 bewegenden Stift 24 in eine Linearbewegung des Nutelements 26 und der Schaltgabel 44 umgewandelt. Das Rastelement 52 der Arretierungseinrichtung 50 gelangt mit seinem abgerundeten Kopf in den Stellpositionen der Schaltgabel 44 jeweils in Eingriff mit einer der Rastausnehmungen 54 und verhindert unerwünschte Bewegungen der Schaltgabel 44.

Der Träger 22 kann bei gelöster Schraube 30 gegenüber dem Stellelement 12 um 180° gedreht werden. Wird dann auch die Schaltgabel um 180° gedreht, gelangt der Stift 24 wieder mit der Nut 42 und das Rastelement 52 mit den Rastausnehmungen 54 in Eingriff. Dadurch erhält man eine vertauschte Zuordnung der Positionen des Hebels 16 und der Schaltgabel 44, was wiederum einen weiteren Freiheitsgrad beim Entwurf des Getriebes bedeutet.

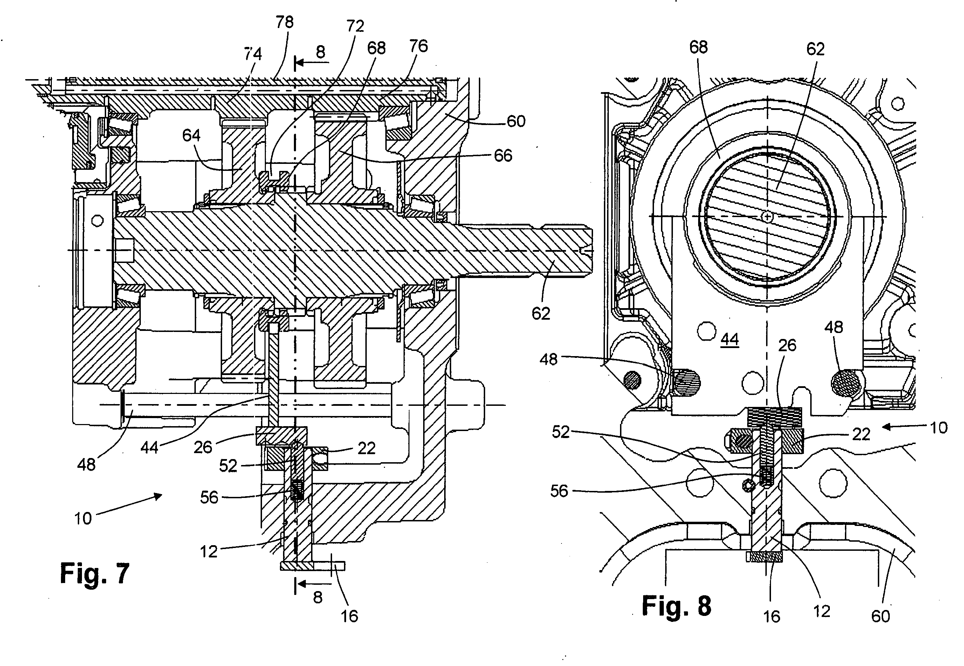

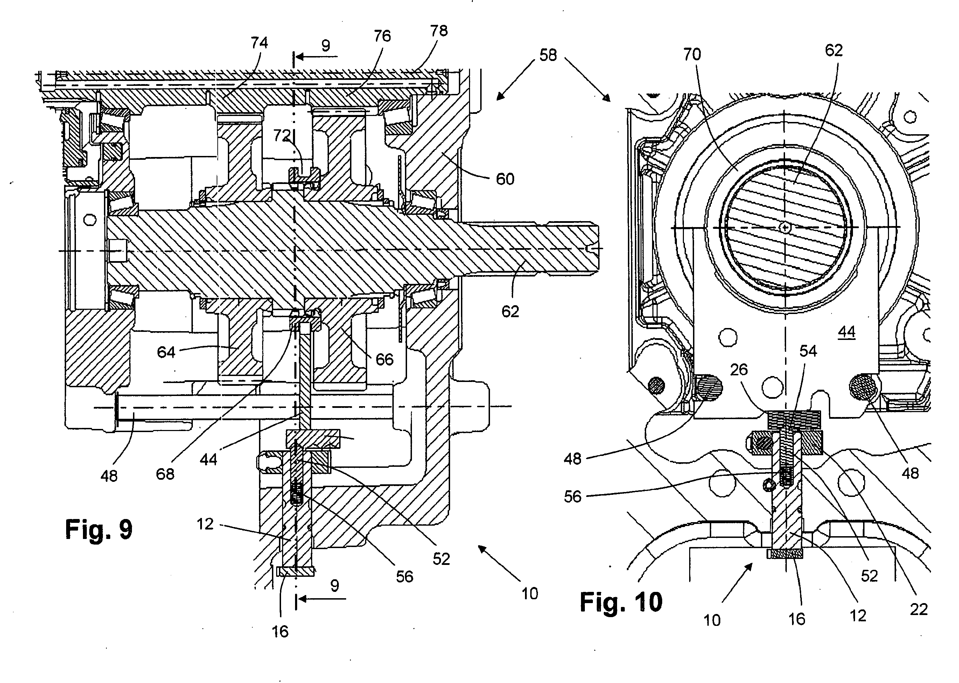

Die Figuren 5 bis 10 zeigen einen Getriebezusammenbau 58, in dem die beschriebene Schaltanordnung 10 Verwendung findet. Innerhalb eines Gehäuses 60 befindet sich eine erste Welle 62, auf der ein erstes Gangrad 64 und ein zweites Gangrad 66 frei drehbar angeordnet sind. Eine mit einer umfänglichen Nut 72 ausgestattete Schaltmuffe 68 ist axial verschiebbar auf der Welle 62 angeordnet. Sie ist mit einer Innenverzahnung versehen, die mit einer Außenverzahnung der Welle 62 (oder eines fest mit der Welle 62 fest verbundenen Synchronkörpers (nicht gezeigt)) kämmt. Nasen 70 der Schaltgabel 44 greifen in die Nut 72 der Schaltmuffe 68 ein, so dass letztere axial verschoben werden kann und die Innenverzahnung der Schaltmuffe 68 wahlweise mit einer Außenverzahnung eines der benachbarten Gangräder 64, 66 in Eingriff gebracht werden kann. Die Gangräder 64, 66 kämmen mit weiteren Zahnrädern 74, 76, die auf einer zweiten Welle 78 drehfest angebracht sind. Dadurch kann die Schaltmuffe 68 aus der in den Figuren 5 und 6 dargestellten Leerlaufposition in eine Position, in der der Kraftfluss von der ersten Welle 62 über das Gangrad 64 und das Zahnrad 74 auf die zweite Welle 78 (oder umgekehrt) übertragen wird, wie sie in den Figuren 7 und 8 dargestellt ist, und in eine Position verbracht werden, in der der Kraftfluss von der ersten Welle 62 über das Gangrad 66 und das Zahnrad 76 auf die zweite Welle 78 (oder umgekehrt) übertragen wird, wie sie in den Figuren 9 und 10 dargestellt ist. In den drei erwähnten, in den Figuren 5 bis 10 gezeigten Stellpositionen der Schaltgabel 44 greift das Rastelement 52 in je eine andere der Rastausnehmungen 54 ein. Der dargestellte Getriebezusammenbau 58 hat demnach zwei Übersetzungsstufen. Anzumerken ist noch, dass die Achse 38 des Stellelements 12 die Mittelachse der ersten Welle 62 schneiden kann, aber nicht unbedingt muss.

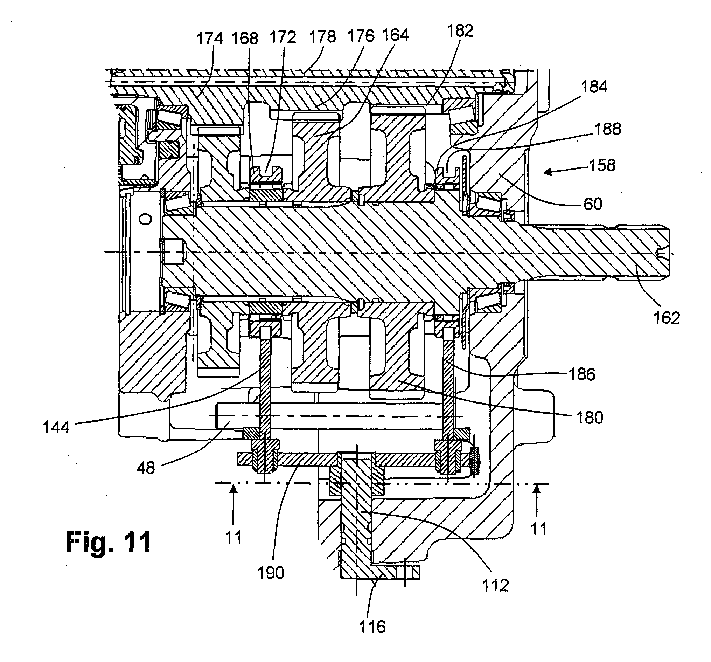

Das in den Figuren 5 bis 10 dargestellte Getriebegehäuse 60 kann ohne wesentliche Änderungen auch einen dreistufigen Getriebezusammenbau 158 aufnehmen, wie er in der Figur 11 dargestellt ist. Der Getriebezusammenbau 158 umfasst ebenfalls eine erste Welle 162, eine zweite Welle 178, ein erstes Gangrad 164, ein zweites Gangrad 166, mit diesen kämmende, auf der zweiten Welle 178 drehfest angeordnete Zahnräder 174, 176 und eine Schaltmuffe 168, die durch eine in die Nut 172 der Schaltmuffe 168 eingreifende Schaltgabel 144 wahlweise in Eingriff mit dem Gangrad 164 oder 166 gebracht werden.

Der Getriebezusammenbau 158 umfasst weiterhin ein drittes Gangrad 180 auf der ersten Welle 162 und ein drittes Zahnrad 182 auf der zweiten Welle 178. Eine zweite Schaltmuffe 184 ist ebenfalls auf der ersten Welle 162 axial verschiebbar und dient zur Herstellung einer auswählbaren Verbindung der Welle 162 mit dem dritten Gangrad 180. Eine zweite Schaltgabel 186 greift in eine Nut 188 der zweiten Schaltmuffe 184 ein, um diese axial zu verschieben.

Die Verstellbewegung der Schaltgabeln 144, 186 erfolgt beim Getriebezusammenbau 158 über den Hebel 116 und das drehbar im Gehäuse 60 gelagerte Stellelement 112, die mit ihren Gegenstücken aus den Figuren 1 bis 10 identisch sind. Das Stellelement 112 ist jedoch mit einer Kurvenscheibe 190 verbunden, in die Steuerkurven 194 (s. Figur 11) eingebracht sind, welche mit Kurvenfolgern 192 zusammenwirken, die ihrerseits die Schaltgabeln 144 bzw. 186 bewegen.

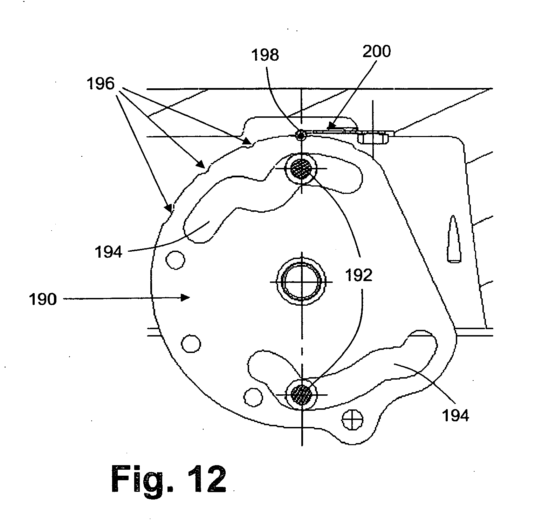

Anhand der Figur 12 ist erkennbar, dass die Kurvenscheibe 190 randseitige Ausnehmungen 196 hat, die zur Arretierung der Kurvenscheibe 190 in ihren Stellpositionen mit einem Rastelement 198 zusammenwirken, das durch eine das Rastelement 198 in die Ausnehmungen 196 vorspannende Feder 200 am Gehäuse 60 befestigt ist. Der Schaltweg des Getriebezusammenbaus 158 nach Figur 11 und 12, der eine dreistufige Schaltung ermöglicht, ist mit dem Schaltweg des zweistufigen Getriebezusammenbaus 58 nach Figur 5 bis 10 identisch.

## Patentansprüche

1. Schaltanordnung (10) zum Verschieben einer Schaltgabel (44) eines Schaltgetriebezusammenbaus (58) entlang einer Schaltstange (48), mit einem um eine Achse (38) drehbar gelagerten Stellelement (12), das über einen Antriebsmechanismus (18) mit der auf der Schaltstange (48) verschiebbar gelagerten Schaltgabel (44) verbunden ist, welcher zur Umsetzung der Drehbewegung des Stellelements (12) in eine Verschiebebewegung der Schaltgabel (44) entlang der Schaltstange (48) eingerichtet ist, und mit einer Arretierungseinrichtung (50) zur Arretierung der Schaltgabel (44) in ausgewählten Stellpositionen, **dadurch gekennzeichnet, dass** die Arretierungseinrichtung (50) ausgelegt ist, eine Rastverbindung zwischen dem Stellelement (12) oder einem sich mit dem Stellelement (12) bewegenden Element und der Schaltgabel (44) oder einem sich mit der Schaltgabel (44) bewegenden Element herzustellen.

2. Schaltanordnung (10) nach Anspruch 1, **dadurch gekennzeichnet, dass** der Antriebsmechanismus (18) einen Träger (22) mit einem exzentrisch zur Achse (38) des Stellelements (12) angeordneten Stift (24) und ein mit einer Nut (42) ausgestattetes Nutelement (26) umfasst, mit dessen Nut (42) der Stift (24) im Eingriff steht.

3. Schaltanordnung (10) nach Anspruch 2, **dadurch gekennzeichnet, dass** der Stift (24) gegenüber dem Träger (22) drehbar und gegenüber dem Nutelement (26) drehfest gelagert ist.

4. Schaltanordnung (10) nach einem der Ansprüche 1 bis 3, **dadurch gekennzeichnet, dass** die Arretierungseinrichtung (50) eine Feder (56) und ein Rastelement (52) umfasst, das durch die Feder (56) in eine von mehreren Rastausnehmungen (54) vorgespannt wird.

5. Schaltanordnung (10) nach Anspruch 4, **dadurch gekennzeichnet, dass** die Rastausnehmungen (54) im Nutelement (26) vorgesehen sind, und dass die Feder (56) am Stellelement (12) abgestützt ist.

6. Schaltanordnung (10) nach einem der Ansprüche 1 bis 5, **dadurch gekennzeichnet, dass** die Arretierungseinrichtung (50) zumindest teilweise innerhalb einer stirnseitigen Öffnung des Stellelements (12) angeordnet ist.

7. Schaltanordnung (10) nach einem der Ansprüche 1 bis 6, **dadurch gekennzeichnet, dass** die Arretierungseinrichtung (50) koaxial zur Achse (38) des Stellelements (12) angeordnet ist.

8. Schaltanordnung (10) nach einem der Ansprüche 1 bis 7, **dadurch gekennzeichnet, dass** der Antriebsmechanismus (18) gegenüber dem Stellelement (12) in unterschiedlichen Winkelstellungen festlegbar ist.

9. Getriebezusammenbau (58), insbesondere für den Antriebsstrang eines Arbeitsfahrzeugs, mit einer ersten Welle (62), auf der ein Gangrad (64, 66) drehbar gelagert ist, einer zweiten Welle (78), die ein mit dem Gangrad (64, 66) kämmendes Zahnrad (74, 76) trägt, einer gegenüber der ersten Welle (62) verschiebbar gelagerten Schaltmuffe (68), die in einer ersten Position eine drehmomentschlüssige Verbindung zwischen der ersten Welle (62) und dem Gangrad (64, 66) herstellt, welche Verbindung in einer zweiten Position der Schaltmuffe (68) getrennt ist, wobei die Schaltmuffe (68) mit einer Schaltgabel (44) zusammenwirkt, die durch eine Schaltanordnung (10) nach einem der vorhergehenden Ansprüche zwischen der ersten und zweiten Position bewegbar ist.

10. Getriebezusammenbau (58) nach Anspruch 9 mit einem den Getriebezusammenbau enthaltenden Gehäuse (60).

11. Getriebezusammenbau (58) nach Anspruch 10, **dadurch gekennzeichnet, dass** in das Gehäuse (60) eine Schaltanordnung einbaubar ist, die eine mit dem Stellelement (12) verbindbare Kurvenscheibe (190) mit Steuerkurven (194) umfasst, in die mit der Schaltgabel (144, 186) zusammenwirkende Kurvenfolger (192) eingreifen.

## Claims

1. Shifting arrangement (10) for displacing a selector fork (44) of a shift transmission assembly (58) along a shift rod (48), having an actuating element (12) which is mounted so as to be rotatable about an axis (38) and which is connected by means of a drive mechanism (18) to the selector fork (44) which is mounted so as to be displaceable on the shift rod (48) and which is designed to convert the rotational movement of the actuating element (12) into a displacement movement of the selector fork (44) along the shift rod (48), and having a locking device (50) for locking the selector fork (44) in selected actuating positions, **characterized in that** the locking device (50) is designed to produce a latching connection between the actuating element (12), or an element which moves with the actuating element (12), and the selector fork (44), or an element which moves with the selector fork (44).

2. Shifting arrangement (10) according to Claim 1, **characterized in that** the drive mechanism (18) comprises a carrier (22), having a pin (24) which is arranged eccentrically with respect to the axis (38) of the actuating element (12), and a groove element (26) which is provided with a groove (42), the pin (24) engaging with the groove (42) of said groove element (26).

3. Shifting arrangement (10) according to Claim 2, **characterized in that** the pin (24) is mounted so as to be rotatable with respect to the carrier (22) and rotationally fixed with respect to the groove element (26).

4. Shifting arrangement (10) according to one of Claims 1 to 3, **characterized in that** the locking device (50) comprises a spring (56) and a latching element (52) which is preloaded by the spring (56) into one of a plurality of latching recesses (54).

5. Shifting arrangement (10) according to Claim 4, **characterized in that** the latching recesses (54) are provided in the groove element (26) and **in that** the spring (56) is supported on the actuating element (12).

6. Shifting arrangement (10) according to one of Claims 1 to 5, **characterized in that** the locking device (50) is arranged at least partially within an end-side opening of the actuating element (12).

7. Shifting arrangement (10) according to one of Claims 1 to 6, **characterized in that** the locking device (50) is arranged coaxially with respect to the axis (38) of the actuating element (12).

8. Shifting arrangement (10) according to one of Claims 1 to 7, **characterized in that** the drive mechanism (18) can be fixed in different angular positions with respect to the actuating element (12).

9. Transmission assembly (58), in particular for the drivetrain of a work vehicle, having a first shaft (62) on which a gearwheel (64, 66) is rotatably mounted, having a second shaft (78) which supports a toothed wheel (74, 76) which meshes with the gearwheel (64, 66), having a shift sleeve (68) which is mounted so as to be displaceable with respect to the first shaft (62) and which, in a first position, produces a connection, which is fixed in terms of torque, between the first shaft (62) and the gearwheel (64, 66), which connection is separated in a second position of the shift sleeve (68), the shift sleeve (68) interacting with a selector fork (44) which can be moved between the first and second positions by means of a shifting arrangement (10) according to one of the preceding claims.

10. Transmission assembly (58) according to Claim 9, having a housing (60) which contains the transmission assembly.

11. Transmission assembly (58) according to Claim 10, **characterized in that** a shifting arrangement can be installed into the housing (60), which shifting arrangement comprises a cam disk (190) which can be connected to the actuating element (12) and which has control cams (194) into which engage cam followers (192) which interact with the selector fork (144, 186).

## Revendications

1. Dispositif de commutation (10) pour déplacer une fourchette de commutation (44) d'un ensemble de transmission à changement de vitesse (58) le long d'une tringle de changement de vitesse (48), comprenant un élément de commande (12) monté à rotation autour d'un axe (38), lequel est connecté par le biais d'un mécanisme d'entraînement (18) à la fourchette de commutation (44) montée de manière déplaçable sur la tringle de changement de vitesse (48), le mécanisme d'entraînement étant prévu pour convertir le mouvement de rotation de l'élément de commande (12) en un mouvement de translation de la fourchette de commutation (44) le long de la tringle de changement de vitesse (48), et comprenant un dispositif de blocage (50) pour bloquer la fourchette de commutation (44) dans des positions de commande sélectionnées, **caractérisé en ce que** le dispositif de blocage (50) est conçu pour créer une connexion par encliquetage entre l'élément de commande (12) ou un élément se déplaçant avec l'élément de commande (12) et la fourchette de commutation (44) ou un élément se déplaçant avec la fourchette de commutation (44).

2. Dispositif de commutation (10) selon la revendication 1, **caractérisé en ce que** le mécanisme d'entraînement (18) comprend un support (22) avec une broche (24) disposée de manière excentrée par rapport à l'axe (38) de l'élément de commande (12), et un élément de rainure (26) pourvu d'une rainure (42), avec laquelle (42) la broche (24) vient en prise.

3. Dispositif de commutation (10) selon la revendication 2, **caractérisé en ce que** la broche (24) est montée de manière rotative par rapport au support (22) et de manière solidaire en rotation par rapport à l'élément de rainure (26).

4. Dispositif de commutation (10) selon l'une quelconque des revendications 1 à 3, **caractérisé en ce que** le dispositif de blocage (50) comprend un ressort (56) et un élément d'encliquetage (52) qui est précontraint par le ressort (56) dans un de plusieurs évidements d'encliquetage (54).

5. Dispositif de commutation (10) selon la revendication 4, **caractérisé en ce que** les évidements d'encliquetage (54) sont prévus dans l'élément de rainure (26) et **en ce que** le ressort (56) est supporté sur l'élément de commande (12).

6. Dispositif de commutation (10) selon l'une quelconque des revendications 1 à 5, **caractérisé en ce que** le dispositif de blocage (50) est disposé au moins en partie à l'intérieur d'une ouverture frontale de l'élément de commande (12).

7. Dispositif de commutation (10) selon l'une quelconque des revendications 1 à 6, **caractérisé en ce que** le dispositif de blocage (50) est disposé coaxialement à l'axe (38) de l'élément de commande (12).

8. Dispositif de commutation (10) selon l'une quelconque des revendications 1 à 7, **caractérisé en ce que** le mécanisme d'entraînement (18) peut être fixé dans différentes positions angulaires par rapport à l'élément de commande (12).

9. Ensemble de transmission (58), en particulier pour la chaîne de transmission d'un véhicule de travail, comprenant un premier arbre (62), sur lequel est montée à rotation un pignon de vitesse (64, 66), un deuxième arbre (78), qui porte une roue dentée (74, 76) s'engrenant avec le pignon de vitesse (64, 66), un manchon de commande (68) monté de manière à pouvoir coulisser par rapport au premier arbre (62), qui crée, dans une première position, une connexion par engagement de couple entre le premier arbre (62) et le pignon de vitesse (64, 66), laquelle connexion est ouverte dans une deuxième position du manchon de commande (68), le manchon de commande (68) coopérant avec une fourchette de commutation (44) qui peut être déplacée entre la première et la deuxième position par un agencement de commutation (10) selon l'une quelconque des revendications précédentes.

10. Ensemble de transmission (58) selon la revendication 9, comprenant un boîtier contenant l'ensemble de transmission.

11. Ensemble de transmission (58) selon la revendication 10, **caractérisé en ce qu'**un agencement de commutation peut être intégré dans le boîtier (60), lequel comprend un disque de came (190) pouvant être connecté à l'élément de commande (12), avec des cames de commande (194), dans lesquelles viennent en prise des suiveurs de cames (192) coopérant avec la fourchette de commutation (144, 186).
